# EUROPEAN PATENT SPECIFICATION

(11) **EP 0 891 679 B1**
(45) Date of publication and mention of the grant of the patent: **08.10.2003**
(21) Application number: 97907064.6
(22) Date of filing: 03.03.1997
(51) Int. Cl.: H04Q 7/38

(54) **RADIO COMMUNICATIONS SYSTEM WITH SERVICE DEPENDENT BANDWIDTH ALLOCATION**
FUNKKOMMUNIKATIONSSYSTEM MIT DIENSTABHÄNGIGER BANDBREITENZUWEISUNG
SYSTEME DE RADIOCOMMUNICATIONS DANS LEQUEL L'AFFECTATION DE LA LARGEUR DE BANDE DEPEND DU SERVICE

(30) Priority: 03.04.1996 GB 9607096
(43) Date of publication of application: 20.01.1999
(73) Proprietor: Motorola Limited, Basingstoke, Hampshire RG22 4PD (GB)
(72) Inventor: ROBINSON, William, Neil, Weybourne, Farnham, Surrey GU9 9ED (GB); WHINNETT, Nicholas, William, F-75004 Paris (FR); GIBBS, Jonathan, Alastair, Southampton, Hampshire SO30 2UL (GB)
(74) Representative: Potts, Susan Patricia
(86) International application number: EP9701046
(87) International publication number: WO97038547

(56) References cited:
- EP-A- 0 700 225
- WO-A-95/35002
- WONG P ET AL: "PERFORMANCE OF MULTI-BEARER CONNECTIONS FOR VARIED DATA SERVICES IN A TDMA SYSTEM" SERVING HUMANITY THROUGH COMMUNICATIONS. SUPERCOMM/ICC, NEW ORLEANS, US, MAY 1 - 5, 1994, vol. 1, pages 593-597, XP000438982

## Description

### Field of the Invention

Generally, the present invention relates to communication systems and more particularly to adapting a communication system to the requirements of a communication system user.

### Background of the Invention

The next generation of wireless radio communication services will bring multi media capability (e.g. simultaneous voice, video and text) and the possibility of a single radio communication device for use in all the user environments (e.g. business, domestic and vehicular). It is envisioned that the users communication requirements will vary from time to time. For example, frequently the users domestic communications may only require speech communication whereas during the business hours they may require to provide full multi media service including integrated speech telephony video and text all of the highest most reliable performance. Accordingly, it is desirable to have a communication system that adapts to the needs of the user as well as a communication unit that adapts to the needs of the user.

EP-A-0700225 discloses a communications system having the features recited in the preamble to appended claim 1.

WO-A-9535002 discloses negotiation of a services configuration in a digital communications system and describes first and second devices wherein the first device requests a change of service configuration without terminating the current traffic channel connection and enabling use of services such as speech and facsimile.

### Summary of the Invention

The present invention consists of a communication system comprising: a communication device capable of communicating using a plurality of communication services; means for selecting between a first communication service and a second or additional communication service during a communication with a remote communication device; and a communication channel for providing the communication between the communication device and a base site transceiver, the communication channel having a bandwith dependent upon a communication service(s) selected from the plurality of communication service provided by the communication device, wherein the communication device is characterised by; a first module providing a first communication service; and a second module detachably coupled to the first module and providing at least a second communication service. The plurality of communication services include voice services, video services, data services, facsimile services and electronic mail services. In one embodiment, the communication device comprises a first module providing a first communication service and a second module detachably coupled to the first module and providing at least a second communication service, wherein said means for selecting occurs when the second module is coupled to or decoupled from the first module during a communication.

### Brief Description of the Drawings

FIG. 1 is an illustration in block diagram form of the radio communication system in accordance with the present invention.
FIG. 2 is an illustration of a radio communication unit providing a subset of the possible radio communication services.
FIG. 3 is an illustration of a radio communication unit providing all of the available radio communication services for the radio communication system.
FIG. 4 is an illustration of an alternative radio communication device in accordance with the present device.
FIG. 5 is an illustration of the message exchange between a radio communication unit and a base site transceiver in accordance with the present invention.

### Detailed Description of a Preferred Embodiment

The described embodiment incorporates a modular radio communication device, wherein different modules provide access to different radio communication services. Upon adding or deleting modules to and from the radio communication unit, the radio communication system re configures the channel providing radio communication services to the radio communication unit. For example, when a voice-only radio communication unit is communicating over a radio channel to a base site transceiver the requirements of the channel bandwidth are minimised. Upon connection of the voice-only radio communication unit to a peripheral device providing simultaneous video, the radio communication unit sends a signal to the base site transceiver updating the service capability. In response thereto, the base site transceiver modifies the records and adjusts the capabilities of the assigned channel in response to the received signal. Thereby delivering simultaneous video and voice to the radio communication device.

FIG/ 1 is an illustration in block diagram form of a radio communication system 100. Radio communication system 100 includes a base site transceiver 101 and a modular radio communication device 103. The modular radio communication device 103 includes an antenna 105, and receiver 107, a transmitter 109, a processor 111, a detector 120, a first user interface 113 making up a first module 123, and a detachably coupled second user interface 115 imbedded in a peripheral device or second module 125.

The base site transceiver 101 sends and receives radio frequency (RF) signals to and from radio communication units within a fixed geographic area. Radio communication device 103 is one such device serviced by the base site transceiver 101 via radio communication channel 117. In the preferred embodiment, the radio communication system is capable of providing voice, video, data, fax, e-mail and text data services over the radio communication channel 117.

Upon a set up of radio communications or an alteration in the radio communication services between the base site transceiver and the radio communication device 103, the base site transceiver configures the communication channels features to provide the services required by the radio communication unit 103. The communication channel features include channel frequency, modulation format, modulation rate, spreading factor, forward error correction, channel access assignment, transmit power as appropriate and other features known to those familiar with the art.

Upon reception of RF signals by the radio communication device 103 the antenna 105 receives the radio frequency signals converts them into electrical radio frequency signals for reception by the receiver 107. The receiver 107 converts the electrical RF signals into base band signals for use by the processor 111. The processor 111 formats the base band signals into voice, video, or data for use by an user interface. If the second user interface 115 is detached from the portable radio communication unit 103, then the received data is output over the bus 119 to the first user interface 113. In the preferred embodiment, the first user interface 113 provides lower tier communications, such as voice-only to an end user. If the second user interface 115 is coupled to the radio communication unit 103 via databus 121, then the received information is output via the bus 121 to the second user interface 115. Alternatively, the received information can be divided between the first user interface 113 and the second user interface 115. In the preferred embodiment, the second user interface provides higher tier communications including voice with synchronised video and fax data and text reception for display to an end user. Alternatively, the second module 125, may also include a second processor (not shown) for processing received signals related to the communication services provided by the second user interface 115. Additionally, a similar alteration of the communication services occurs when the second module is decoupled from the first module.

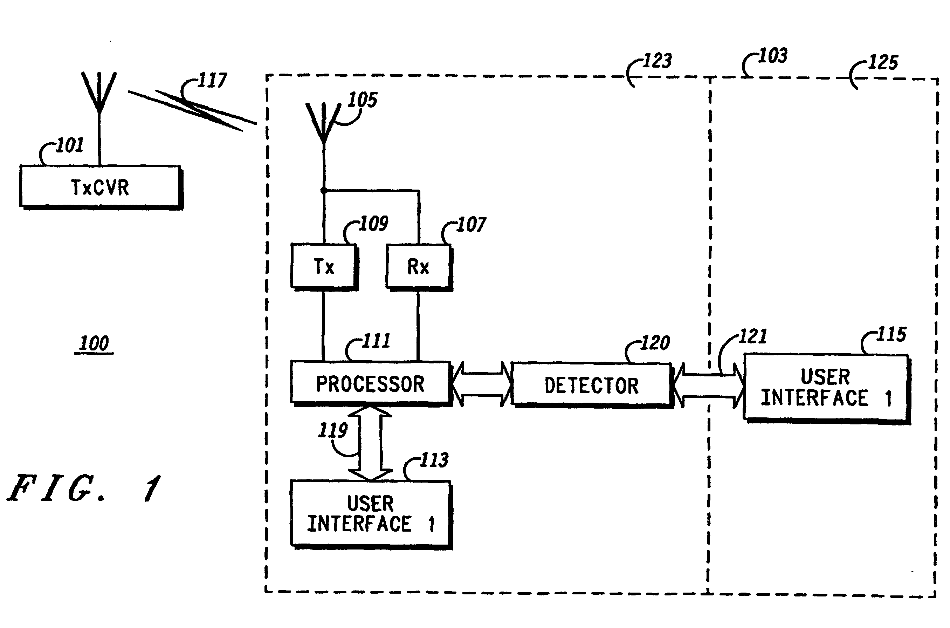

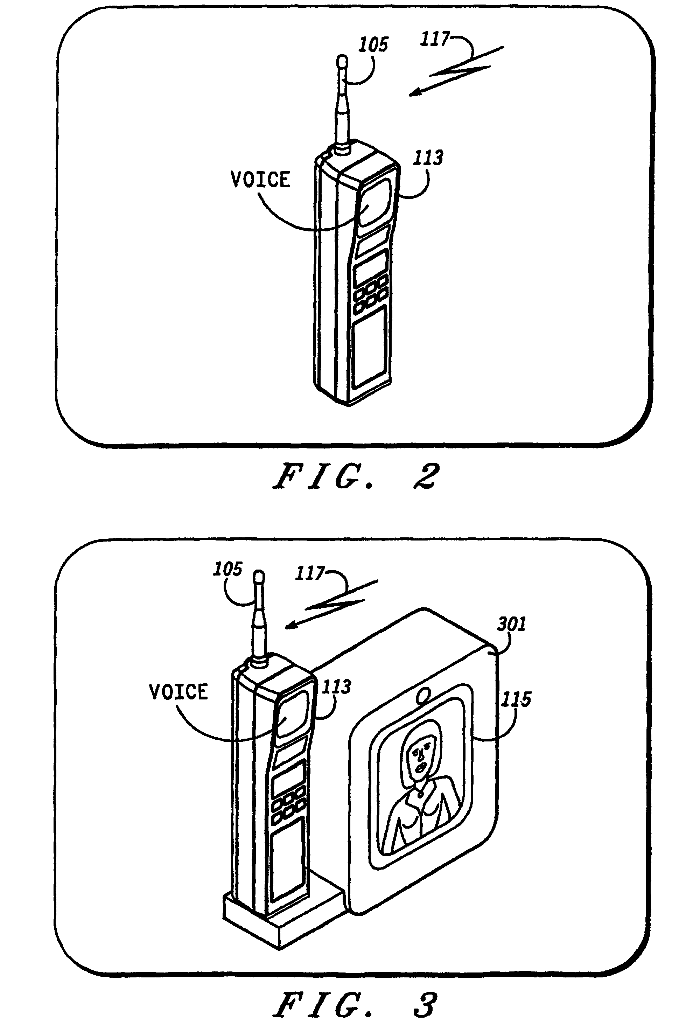

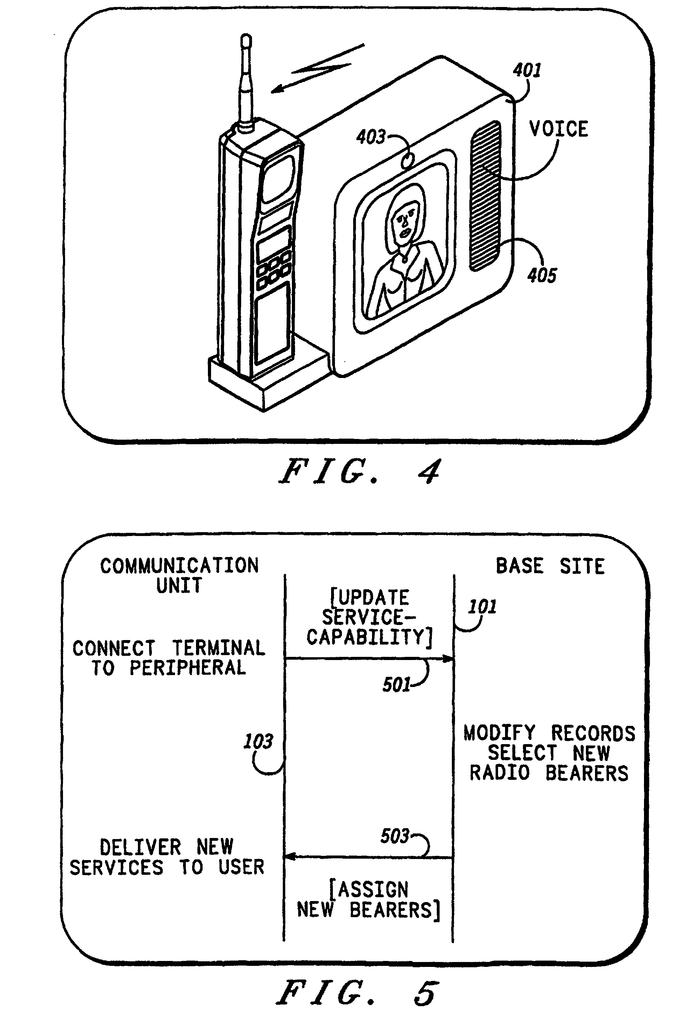

FIG. 2 is an illustration of a radio communication unit 103 of FIG. 1 including only the first user interface 113. In this embodiment, a user may carry this basic voice-only radio communication unit 103 for his private communications in situations when full multi-media communications is not required. It is envisaged that this would occur for a user's personal activities, such as shopping, attending a sporting event, or commuting on the way to work. When the user desires to increase the communication services available, the user may couple a peripheral device 301 containing the second user interface 115 of FIG. 1 to the radio communication unit 103, as illustrated in fiG. 3. It is envisaged that this would occur upon the users arrival at his office. In the preferred embodiment, the peripheral device 301 includes a video display device. Alternatively, as illustrated by a peripheral device 401 of FIG. 4, the peripheral device may include other features such as a higher quality speaker 405 and microphone 403 as well as a higher quality speech decoder (not shown). Alternatively, a user may also desire to decrease the communication services available by decoupling a peripheral device 301, 401 from the radio communication unit 103.

The peripheral devices 301, 401 may be added to or removed from the radio communication device 103 at any time including between communications, during a communication, or while the radio communication device 103 is powered down. When a communication is originally set up, the radio communication device 103 indicates to the base site transceiver 101 the services that the radio communication device 103 will require during the communication. This indication may be in response to an input from the user of the radio communication device 103 or it may be an indication of the capability of the radio communication device 103. In response to receiving this indication, the base site transceiver 101 assigns a channel to the radio communication device 103. The assigned channel has a given frequency and bandwidth among other known characteristics. The bandwidth of the channel is determined according to the services that are required. For example, if the communication will only involve voice communications, then the bandwidth assigned may be 9.6 kilobits/second. If the communication will involve voice and video communications, then the bandwidth assigned may be 64 kilobits/second. In this description the term bandwidth refers to the data transfer rate allocated by the communication system 100 in order to support the communication services being delivered via a given terminal. An increase in bandwidth in a radio operating environment can be achieved by changing to a modulation scheme with more bits per symbol, and/or increasing the symbol rate and/or allocating more time, and/or allocating more spreading codes.

Once the communication is in progress, the user may couple or decouple a peripheral device to/from the radio communication device 103 to provide a change of communication services. The detector 120 of FIG. 1 detects the coupling/decoupling of the peripheral device to the radio communication device 103. In the preferred embodiment, the radio communication device 103 has a set of electrical contacts exposed on the bottom of the device that are electrically shorted to a metal plate contained on the peripheral device upon coupling/decoupling of the peripheral device 301, 401 to/from the radio communication device 103. Other equally sufficient connector designs can be used. For ease of describing the invention only the term "coupling" used hereinafter shall refer to the acts of coupling to and decoupling from the radio communication device 103. Alternatively, the radio communication device 103 may have a manual trigger switch to provide an indication to the processor 111 that a peripheral device 301, 401 has been coupled to or decoupled from the radio communication unit 103.

Upon coupling, the peripheral device 301, 401, sends a message to the processor 111 of the radio communication device 103 indicating the communication services that the peripheral device 301, 401 supports. In the preferred embodiment this message is the means for selecting the second or additional communication services. However, other means could be provided such as a user selection of the desired services from a menu on the first or second user interface 113, 115. In response to this message, the radio communication device 103 sends an Update Service Capability message 501 to the base site transceiver 101 over the assigned communication channel, as illustrated in FIG. 5. Upon reception of this message, the base site transceiver 101 analyses the new services that the radio communication unit 103 is requesting and the capabilities of the communication system 100 to handle the desired service. If the appropriate transmission capability is available, then the base site transceiver 101 transmits an Assign New Bearers message 503 to the radio communication unit 103. The Assign New Bearers message 503 includes information such as channel location, bandwidth, and new services provided. Thus, this message provides the means for altering the bandwidth of the communication channel in response to the radio communication device 103 selecting second or additional communication services. In response to receiving this message, the radio communication unit 103 updates the services provided to the user via the peripheral device 301, 401. This adaptation of the radio bearers to match the dynamic capabilities reported by the radio communication device 103 to the base site transceiver 101 allows the communication system 100 to optimise the use of radio capacity whilst fully supporting the changing needs of the user.

If no communications are in progress at the time when the coupling of the peripheral device 301, 401 occurs, then the radio communication device 103 is in Standby Mode. During Standby Mode, it is acceptable to postpone the transmission of the Update Service Capability message 501 until the radio communication device 103 has other needs to communicate with the base site transceiver 101, such as during a call set up or registration. By postponing the transmission of the message 501, the load on a control channel of the communication system 100 can be minimised without penalty to the user of the communication system 100.

It is essential that when adding new communication services such as video to a voice communication, the two communication services must be synchronised. In a preferred embodiment, when integrated multimedia services (voice and video) are received, as previously discussed, the voice is processed and delivered by the first module 123 and the video is processed and delivered by the second module 125. The speech processing function, Fs, requires a finite period of time, Ts. The video is delivered to the user by the second module 125. The second module performs the video processing function, Fv. This processing requires a second finite period of time, Tv, and must be known to the first module 123. Additionally, the time required for the functions of transferring the video signals in the first module 123, Ftv1, and in the second module 125, Ftv2, for processing and delivery in the second module 125 will take a finite amount of time, Ttv, which must be known to the first module 123 and the second module 125. The first module 123 and the second module 125 are responsible for maintaining the required synchronisation between the communication services utilised in the communication. This synchronisation is achieved by applying a time delay function, Fds, for the voice related delay, Ds, and a second time delay function, Fdv, for the video related delay, Dv, applied to the related signals prior to output to the respective user interfaces 113, 115. In a preferred embodiment, a means for synchronising the communication services such that the time delays, Ds and Dv, are calculated and applied and the voice and video are received at their respective user interfaces 113, 115 at the same time in the following description. The time delays are dimensioned consistent with the minimising time, Tm, between the reception of the RF signals and the ultimate delivery to the user. This is expressed as Tm = Ts + Ds = Tv + Ttv + Dv where Tm is as small as possible. The dimensioning of time delays is performed at call set up time and also periodically during the communication as it is influenced by information exchanged between the functions Fs, Fv, Ftv1, Ftv2, Fds and Fdv.

## Claims

1. A communication system (100) comprising:
a communication device (103) capable of communicating using a plurality of communication services;
means for selecting (111) between a first communication service and a second or additional communication service during a communication with a remote communication device; and
a communication channel (117) for providing the communication between the communication device and a base site transceiver (101), the communication channel having a bandwidth dependent upon a communication service(s) selected from the plurality of communication service provided by the communication device, wherein the communication device is **characterised by** :
a first module (123) providing a first communication service; and
a second module (125) detachably coupled to the first module (123) and providing at least a second communication service.

2. A communication system (100) in accordance with claim 1 wherein the plurality of communication services include voice services, video services, data services, facsimile services and electronic mail services.

3. A communication system (100) in accordance with claim 1 or claim 2 wherein the communication system further comprises means (101) for altering the bandwidth of the communication channel in response to said communication device (103) selecting a second or additional communication service during a communication with a remote communication device.

4. A communication system (100) in accordance with claim 3 wherein said means (101) for altering the bandwidth is further defined as altering the bandwidth to provide only the bandwidth necessary to handle the communication service(s) selected.

5. A communication system (100) in accordance with any preceding claim wherein said means for selecting (111) occurs when the second module (125) becomes coupled to the first module (123) during a communication.

6. A communication system (100) in accordance with any of claims 1 to 4 wherein said means for selecting (111) occurs when the second module (125) becomes decoupled from the first module (123) during a communication.

7. A communication system (100) in accordance with any preceding claim wherein the communication system (103) further comprises means (123, 125) for synchronising video communication services with voice communication services.

8. A communication system in accordance with claim 3 wherein said means for altering further comprises:
means for transmitting (105, 109), responsive to said means for selecting (111), an Update Service Capability message to the base site transceiver (101);
means for receiving the Update Service Capability message at the base site transceiver (101);
means for analysing (101) the capability of the communication system (103) to handle the second or additional service;
means for transmitting (101) an Assign New Bearers message to the radio communication device (103) indicating channel location, bandwidth, and new services provided; and
means for receiving (105, 107) the Assign New Bearers message at the radio communication device (103) and altering the bandwidth of the communication channel (117).

## Patentansprüche

1. Kommunikationssystem (100) mit:
einer Kommunikationsvorrichtung (103), die in der Lage ist, unter Verwendung einer Vielzahl von Kommunikationsdiensten, zu kommunizieren;
Mitteln zum Auswählen (111) zwischen einem ersten Kommunikationsdienst und einem zweiten oder zusätzlichen Kommunikationsdienst während einer Kommunikation mit einer entfernten Kommunikationsvorrichtung; und
einem Kommunikationskanal (117) zum Bereitstellen der Kommunikation zwischen der Kommunikationsvorrichtung und einem Basisstations-Transceiver (101), wobei der Kommunikationskanal eine Bandbreite aufweist, die von (einem) ausgewählten Kommunikationsdienst(en) aus der Vielzahl von Kommunikationsdiensten, die von der Kommunikationsvorrichtung zur Verfügung gestellt wird, abhängt, wobei die Kommunikationsvorrichtung **gekennzeichnet ist durch**:
ein erstes Modul (123), das einen ersten Kommunikationsdienst zur Verfügung stellt;
ein zweites Modul (125), das abnehmbar mit dem ersten Modul (123) gekoppelt ist und wenigstens einen zweiten Kommunikationsdienst zur Verfügung stellt.

2. Kommunikationssystem (100) nach Anspruch 1, wobei die Vielzahl von Kommunikationsdiensten Sprachdienste, Videodienste, Datendienste, Faxdienste und Email-Dienste umfasst.

3. Kommunikationssystem (100) nach Anspruch 1 oder 2, wobei das Kommunikationssystem weiterhin Mittel (101) zum Ändern der Bandbreite des Kommunikationskanals in Reaktion darauf umfasst, dass die Kommunikationsvorrichtung (103) einen zweiten oder zusätzlichen Kommunikationsdienst während einer Kommunikation mit einer entfernten Kommunikationsvorrichtung auswählt.

4. Kommunikationssystem (100) nach Anspruch 3, wobei die Mittel (101) zum Ändern der Bandbreite weiterhin so definiert sind, dass sie die Bandbreite ändern, um nur die für die Handhabung des/der ausgewählten Kommunikationsdienste(s) erforderliche Bandbreite zur Verfügung stellen.

5. Kommunikationssystem (100) nach einem der vorangehenden Ansprüche, wobei die Mittel zum Auswählen (111) in Kraft treten, wenn das zweite Modul (125) während einer Kommunikation mit dem ersten Modul (123) gekoppelt wird.

6. Kommunikationssystem (100) nach einem der Ansprüche 1 bis 4, wobei die Mittel zum Auswählen (111) in Kraft treten, wenn das zweite Modul (125) während einer Kommunikation von dem ersten Modul (123) entkoppelt wird.

7. Kommunikationssystem (100) nach einem der vorangehenden Ansprüche, wobei das Kommunikationssystem (103) weiterhin Mittel (123, 125) zum Synchronisieren von Videokommunikationsdiensten mit Sprachkommunikationsdiensten umfasst.

8. Kommunikationssystem nach Anspruch 3, wobei die Mittel zum Ändern weiterhin umfassen:
Mittel zum Senden (15, 109) einer Aktualisierungs-Dienst-Befähigungs-Nachricht ("Update Service Capability message") an den Basisstations-Transceiver (101) als Reaktion auf die Mittel zum Auswählen (111);
Mittel zum Empfangen der Aktualisierungs-Dienst-Befähigungs-Nachricht an dem Basisstations-Transceiver (101);
Mittel zum Analysieren (101) der Befähigung des Kommunikationssystems (103), den zweiten oder zusätzlichen Dienst zu handhaben;
Mittel zum Senden (101) einer Neue-Träger-Zuweisungs-Nachricht ("Assign New Bearers message") zu der Funkkommunikationsvorrichtung (103) , die den Kanalort, die Bandbreite und neue zur Verfügung gestellte Dienste anzeigt ; und
Mittel zum Empfangen (105, 107) der Neue-Träger-Zuweisungs-Nachricht an der Funkkommunikationsvorrichtung (103) und zum Ändern der Bandbreite des Kommunikationskanals (117).

## Revendications

1. Système de communication (100) comprenant :
un dispositif de communication (103) capable de communiquer en utilisant plusieurs services de communications ;
des moyens (111) permettant de choisir entre un premier service de communication et un deuxième service de communication, ou service additionnel, pendant une communication avec un dispositif de communication distant ; et
un canal de communication (117) pour établir la communication entre le dispositif de communication et un émetteur-récepteur de station de base (101), où le canal de communication a une largeur de bande qui dépend du ou des services de communication qui sont sélectionnés parmi la pluralité de services de communication offerts par le dispositif de communication ;
le dispositif de communication étant **caractérisé par** :
un premier module (123) offrant un premier service de communication ; et
un second module (125), couplé de manière détachable au premier module (123), et offrant au moins un deuxième service de communication.

2. Système de communication (100) selon la revendication 1, dans lequel la pluralité de services de communication comprend des services de téléphonie, des services de vidéo, des services de données, des services de télécopie, et des services de messagerie électronique.

3. Système de communication (100) selon la revendication 1 ou la revendication 2, dans lequel le système de communication comprend, en outre, des moyens (101) pour modifier la largeur de bande du canal de communication en réponse au fait que ledit dispositif de communication (103) sélectionne un deuxième service de communication, ou service additionnel, pendant une communication avec un dispositif de communication distant.

4. Système de communication (100) selon la revendication 3, dans lequel lesdits moyens (101) pour modifier la largeur de bande sont, en outre, définis comme modifiant la largeur de bande de manière à n'offrir que la largeur de bande nécessaire pour la prise en charge du ou des services de communication sélectionnés.

5. Système de communication (100) selon l'une quelconque des revendications précédentes, dans lequel lesdits moyens de sélection (111) se manifestent lorsque le second module (125) est couplé au premier module (123) pendant une communication.

6. Système de communication (100) selon l'une quelconque des revendications 1 à 4, dans lequel lesdits moyens de sélection (111) se manifestent lorsque le second module (125) est découplé du premier module (123) pendant une communication.

7. Système de communication (100) selon l'une quelconque des revendications précédentes, dans lequel le système de communication (103) comprend, en outre, des moyens (123, 125) pour synchroniser les services de communications vidéo avec les services de communications vocales.

8. Système de communication selon la revendication 3, dans lequel lesdits moyens de modification comprennent, en outre :
des moyens (105, 109) destinés à transmettre à l'émetteur-récepteur de station de base (101), en réponse auxdits moyens de sélection (111), un message Mise à Jour des Services Pris en Charge ;
des moyens destinés à recevoir le message Mise à Jour des Services Pris en Charge au niveau l'émetteur-récepteur de station de base (101) ;
des moyens (101) destinés à analyser les capacités du système de communication (103) quant à la prise en charge du deuxième service, ou service additionnel ;
des moyens (101) destinés à transmettre au dispositif de radiocommunication (103) un message Attribution Nouveaux Supports, indiquant l'emplacement du canal, la largeur de bande, et les nouveaux services offerts ; et
des moyens (105, 107) destinés à recevoir le message Attribution Nouveaux Supports au niveau du dispositif de radiocommunication (103) et à modifier la largeur de bande du canal de communication (117).
